# EUROPEAN PATENT APPLICATION

(11) **EP 4 783 613 A1**
(43) Date of publication of application: **29.07.2026**
(21) Application number: 25203834.4
(22) Date of filing: 22.09.2025
(51) Int. Cl.: H04S 7/00

(54) **SPATIAL AUDIO PLAYBACK DEVICE AND METHOD**

(30) Priority: 22.01.2025 US 202519033625
(71) Applicant: MEDIATEK INC., Hsinchu City 30078 (TW)
(72) Inventor: LEE, Hung-Huei, 30078 Hsinchu City (TW)
(74) Representative: Haseltine Lake Kempner LLP

(57) **Abstract**

A spatial audio playback device, comprises: a transceiver unit, which communicates with the head-mounted device through wireless communication, is configured to receive information of a motion of the head-mounted device on a motion sensing signal and information or a transmission standard of the wireless communication from the head-mounted device; and a processing unit, which is coupled to the transceiver unit, is configured to predict head information after a predetermined time based on the information of the motion, adjust spatial audio based on the head information after the predetermined time to generate adjusted spatial audio and transmit the adjusted spatial audio to the transceiver unit, and transmit the adjusted spatial audio to the head-mounted device through the transceiver unit; the adjusted spatial audio is transmitted to the head-mounted device by the transceiver unit; and the predetermined time changes according to the information or the transmission standard of the wireless communication.

## Description

### BACKGROUND

"Spatial audio" is a kind of sound playback technology widely used in playback devices. Playback devices can sense sounds from various directions without requiring a specific multi-speaker setup. Therefore, spatial audio can bring users a special immersive audio experience.

In existing technology, achieving spatial audio effects requires the assistance of head-tracking technology of the user's wearable device. The purpose is that when the users move their heads, the playback devices can dynamically perceive and simulate the surround sound effect of spatial audio, thereby achieving high immediacy. Therefore, reducing the delay time of spatial audio is a key factor in improving the user experience of spatial audio.

However, due to limitations of the playback device, encoding technology, etc., a general playback device would inevitably produce a certain degree of delay during the process of audio transmission, thereby affecting the users' experience of spatial audio. For example, the delays from the end of the user's head movement to the change and convergence of the voice often greatly reduces the quality of the user's experience with spatial audio. Therefore, how to improve user's experience with spatial audio is a concerned matter.

### BRIEF DESCRIPTION OF THE DRAWINGS

Embodiments of the present disclosure will now be described, by way of example only, with reference to the accompanying drawings, in which:
Fig. 1 illustrates a schematic diagram of a spatial audio playback device according to an embodiment of the present disclosure.
Fig. 2 illustrates a schematic diagram of signal delay time period according to an embodiment of the present disclosure.
Fig. 3 illustrates a flowchart of signal transmission and processing of multiple sub-processing units of a processing unit according to an embodiment of the present disclosure.
Fig. 4 illustrates a flow chart of a spatial audio playback method according to an embodiment of the present disclosure.

### DETAILED DESCRIPTION

Advantages and other features of the systems and methods disclosed herein will become more apparent to those of ordinary skill in the art from the following detailed description of certain preferred embodiments. The accompanying drawings illustrate representative embodiments of the invention. Similar reference numbers are used herein to indicate similar parts. Furthermore, directional terms such as "up" "down" "far" and "near" are merely used to assist in describing the positions of components relative to each other. For example, an "upper" surface of a part is only meant to describe a surface separate from a "lower" surface of the part. Absolute directions are stated without using directional words (that is, the "upper" part here must always be at a higher altitude)

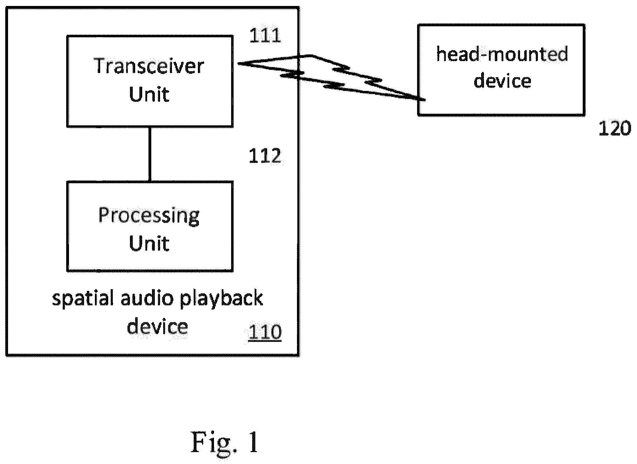

Fig. 1 illustrates a schematic diagram of a spatial audio playback device 110 according to an embodiment of the present disclosure. The spatial audio playback device 110 is communicatively connected to a head-mounted device 120, and the spatial audio playback device 110 comprises a transceiver unit 111 and a processing unit 112.

The transceiver unit 111 may be a transceiver circuit that supports wired networks such as optical fiber, Ethernet, or TV cables, or wireless networks such as Wi-Fi, mobile networks, and Bluetooth. In one embodiment, the communication transceiver 111 includes components such as (but not limited to) digital-to-analog converters, amplifiers, antennas, mixers, etc., depending on its type, but the embodiment is not limited thereto. It is worth noting that, even if the spatial audio playback device 110 mainly uses Bluetooth to communicate with the head-mounted device 120 in the following paragraphs, but the embodiment is not limited thereto.

The processing unit 112 may include a central processing unit (CPU), a microprocessor (MCU) or a field programmable gate array (FPGA) and the like, or may have the chip with data computing function. It is worth noting that, but the embodiment is not limited thereto in the embodiments described of the following paragraphs, the processing unit 112 is further coupled to at least one storage device (not shown in the drawings). The storage device may be a memory, where the memory may be, for example, a read-only memory (ROM), an erasable programmable read-only memory (EPROM) or other non-volatile memory, random access memory (RAM) or other volatile memory, hard disk drive, semiconductor memory or other storage devices are used to store various programs and information and other data, but the embodiment is not limited thereto.

The head-mounted device 120 may be a set of headphones used by the users, but the embodiment is not limited thereto. The head-mounted device 120 can exchange data with the transceiver unit 111 and the processing unit 112 through a specific communication protocol. In some embodiments, the processing unit 112 is provided with relevant Bluetooth communication circuits/modules, and the head-mounted device 120 can exchange data with the processing unit 112 through the Bluetooth Low Energy (BLE) protocol. In some embodiments that use the BLE protocol for data exchange, the data packet transmitted by the head-mounted device 120 may include, for example, a preamble, an address, a header, a payload, and a cyclic redundancy check (CRC) code and other parts. The definition/content of each part can be referred to the relevant specifications of BLE, and the details will not be described here.

In one embodiment, the transceiver unit 111 communicates with the head-mounted device 120 through wireless communication to receive information of a motion of the head-mounted device on a motion sensing signal and information or transmission standard of the wireless communication from the head-mounted device 120.

The motion sensing signal is a sensing signal obtained by using at least one sensor in the head-mounted device 120. The information of a motion of the head-mounted device on the motion sensing signal is configured to represent information related to the user's head movement while wearing the devices. The information or transmission standard of the wireless communication of the head-mounted device 120 is configured to enable the spatial audio playback device 110 to obtain the Bluetooth communication related content of the head-mounted device 120 during communication.

It is worth noting that, the motion sensing signal in the embodiment of the present invention is a continuous signal, and the information of the motion is specific information at a specific time on the continuous signal of the motion sensing signal. That is to say, the motion sensing signal received by the transceiver unit may include a plurality of information of the motion. The plurality of information of the motion is represented as multiple motion information of the user at multiple specific times.

The processing unit 112 is coupled to the transceiver unit 111, and is configured to predict the head information after a predetermined time based on the information of the motion, adjust the spatial audio based on the head information after a predetermined time to generate adjusted spatial audio to the transceiver unit 111. In addition, the adjusted spatial audio is transmitted to the head-mounted device by the transceiver unit, and the predetermined time changes according to the information or the transmission standard of the wireless communication.

In one embodiment, the predetermined time changes according to the information or transmission standard of the wireless communication. That is to say, even if the head-mounted device 120 uses a variety of different information or transmission standard of the wireless communication to transmit the motion sensing signal, the processing unit 112 can calculate and set different predetermined times accordingly. Therefore, the processing unit 112 can achieve the effect of reducing delay under different information or transmission standard of the wireless communication.

The information or transmission standard of the wireless communication transmitted in the embodiment include Bluetooth Codec or Bluetooth Profile. Bluetooth Codec can include sub-band codec (SBC), advanced audio codec (AAC), lossless digital audio codec (LDAC), low complexity communication codec (LC3) and low energy audio (LE Audio), etc., but the embodiment is not limited thereto.

In addition, the Bluetooth Profile may include advance audio distribution profile (A2DP), clear voice capture (CVC), audio video remote control profile (AVRCP), intercom profile (ICP), human interface device profile (HID), headset profile (HSP), object push profile (OPP), etc., but the embodiment is not limited thereto.

It is worth noting that, the spatial audio playback device 110 can include a variety of Bluetooth Codecs or Bluetooth Profiles and can automatically switch between different Bluetooth Codecs or different Bluetooth Profiles. The user may also select a specific Bluetooth Codec or Bluetooth Profile of the spatial audio playback device 110. Moreover, different Bluetooth Codecs or different Bluetooth Profiles need their own encoding time while performing spatial information related processing. The encoding time is highly correlated with the time it takes for spatial audio to be processed and transmitted.

In one embodiment, the predetermined time is plus or minus ten percent of a signal delay time period of the spatial audio playback device 110 and the head-mounted device 120. For example, If the spatial audio playback device 110 predicts that the signal delay time period of the spatial audio playback device 110 and the head-mounted device 120 is 50 milliseconds, the time range of the predetermined time is plus or minus 5 milliseconds of 50 milliseconds, that is, between 45 milliseconds and 55 milliseconds.

Therefore, the predetermined time can be regarded as a time error range after the signal delay time period is adjusted. For example, if the signal delay time period of the spatial audio playback device 110 and the head-mounted device 120 is 50 milliseconds, the processing unit 112 predicts the head position after the predetermined time (45 milliseconds to 55 milliseconds) through the motion sensing signal. The processing unit 112 obtains the user's head information after a predetermined time so as to adjust the spatial audio to generate the adjusted spatial audio to the transceiver unit 111. On the basis of the above, the signal delay time period can be effectively reduced through the calculation and setting of the predetermined time.

It is worth noting that, the audio playback device 100 calculates and sets different predetermined times according to different Bluetooth Codec, and adjusts the signal delay time period of the spatial audio accordingly. Furthermore, the audio playback device 100 can correspondingly adjust the same spatial audio to different signal delay time periods according to the coding complexity of the Bluetooth Codec. Generally speaking, the higher the encoding complexity of Bluetooth Codec, the shorter the prediction time that the audio playback device 100 can predict, that is, the smaller the controllable signal delay time period range is. Relatively, the lower the encoding complexity of Bluetooth Codec, the longer the prediction time that the audio playback device 100 can predict, that is, the larger the controllable signal delay time period range is.

The signal delay time period of the spatial audio playback device 110 and the head-mounted device 120 can be includes multiple times which the spatial audio playback device 110 and the head-mounted device 120 process, transmit and receive signals and spatial audio. The following paragraphs will specify the multiple times or time differences configured to combine the signal delay time period.

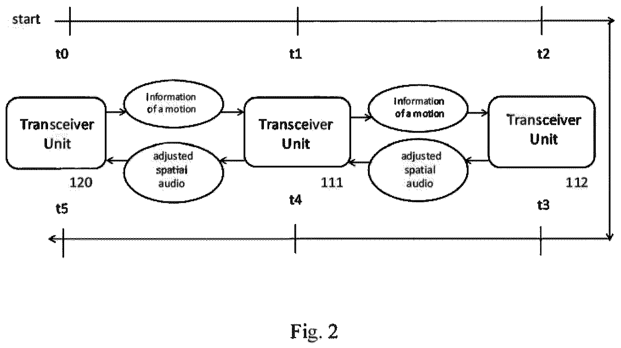

Fig. 2 illustrates a schematic diagram of signal delay time period according to an embodiment of the present disclosure. The schematic diagram of the signal delay time period in Fig. 2 can be implemented by the spatial audio playback device 110 in Fig. 1.

In one embodiment, the signal delay time period of the spatial audio playback device 110 is a time difference between the time when the head-mounted device 120 transmits the information of a motion of the head-mounted device and the time when the head-mounted device 120 receives the adjusted spatial audio. Referring to Fig. 2, the head-mounted device 120 transmits the information of a motion at time t0 and receives the adjusted spatial audio at time t5. On the basis of the above, the time difference T1 (not shown in the drawings) can be represented by the above time t5 minus the time t0. That is to say, the time difference T1 is the signal delay time period after the spatial audio is processed or adjusted by the spatial audio playback device 110.

In one embodiment, the signal delay time period of the spatial audio playback device 110 is the time difference between the time when the transceiver unit 111 receives the information of a motion of the head-mounted device and the time when the transceiver unit 111 transmits the adjusted spatial audio. Referring to Fig. 2, the head-mounted device 120 receives the information of a motion at time t1 and transmits the adjusted spatial audio at time t4. On the basis of the above, the time difference T2 (not shown in the drawings) can be represented by the above-mentioned time t4 minus the time t1. The time difference T2 is shorter than the time difference T1 of the above paragraph and is included within the time difference T1. That is to say, the time difference T2 is a part of the signal delay time period after the spatial audio is processed or adjusted by the spatial audio playback device 110.

In one embodiment, the signal delay time period of the spatial audio playback device 110 includes the signal transmission and processing time of the transceiver unit 111 and the processing unit 112. The signal transmitted and processed between the transceiver unit 111 and the processing unit 112 may include: the information of a motion of the head-mounted device transmitted by the transceiver unit 111 to the processing unit 112, and the adjusted spatial audio generated by the processing unit 112 and transmitted to the transceiver unit 111. Referring to Fig. 2, the processing unit 112 receives the information of a motion of the head-mounted device transmitted by the transceiver unit 111 at time t2 to generate adjusted spatial audio and transmits it to the transceiver unit 111 at time t3 after a series of processing. On the basis of the above, time difference T3 (not shown in the drawings) can be represented by the above time t3 minus the time t2. Time difference T3 is shorter than the time differences T1 and T2 in the above paragraphs, and is included within the time differences T1 and T2. That is to say, time difference T3 is a part of the signal delay time period after the spatial audio is processed or adjusted by the spatial audio playback device 110.

In one embodiment, the processing unit 112 includes a plurality of sub-processing units, and the signal delay time period includes the signal transmission and processing time of one or more sub-processing units. Specifically, the plurality of sub-processing units have a coupling, electrical connection or communication connection relationship with each other to cooperatively handle the process of adjusting spatial audio into adjusted spatial audio. Similar to the above paragraphs, the signal transmission and processing time of the plurality of sub-processing units is a part of the signal delay time period after the spatial audio is processed or adjusted by the spatial audio playback device 110.

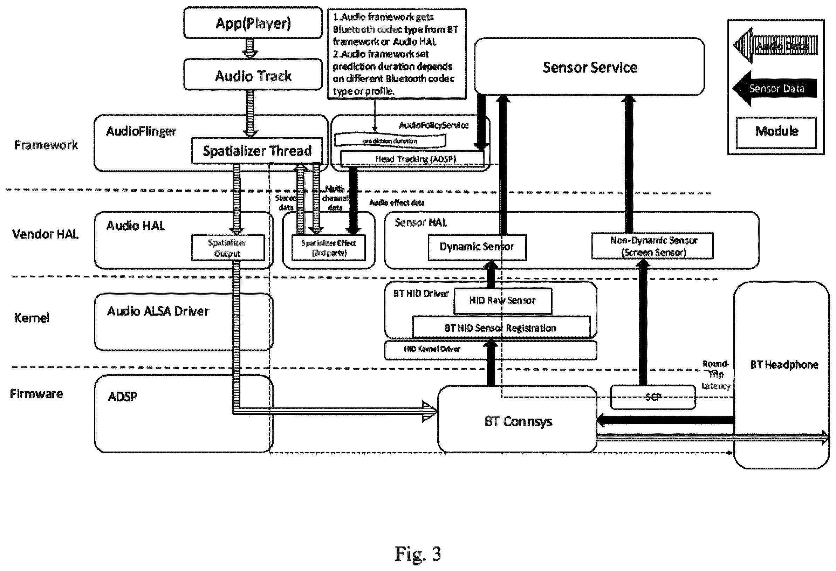

Fig. 3 illustrates a schematic diagram of signal transmission and processing of multiple sub-processing units of a processing unit according to an embodiment of the present disclosure. The schematic diagram of signal transmission and processing can be implemented through the processing unit 112 of the spatial audio playback device 110 of Fig. 1. The following paragraphs will describe the signal transmission and processing processes performed by the plurality of sub-processing units of the processing unit 112 in detail.

Please refer to Fig 3. The plurality of sub-processing units of the processing unit 112 include: Bluetooth driver unit, human interface device (HID), dynamic data sensor, head information tracking unit, audio effect conversion unit, spatial audio output unit, etc., but the embodiment is not limited thereto. In addition, the HID includes a Bluetooth HID registration unit and a HID raw data sensor, but the embodiment is not limited thereto.

First, the processing unit 112 will first trigger the Bluetooth driver unit of the spatial audio playback device 110 after receiving information of a motion of the head-mounted device on the motion sensing signal from the head-mounted device 120 through the transceiver unit 111 during the process of the spatial audio playback device 110 receiving and processing the information of a motion, so as to start processing procedures for the signal received through Bluetooth. Then, the Bluetooth driver unit transmits the information of a motion to the Bluetooth HID sensing registration unit in the HID, and the HID transmits the information of a motion to the dynamic data sensor through the HID raw data sensor. And then, the dynamic data sensor transmits the information of a motion to the head information tracking unit. The head information tracking unit is configured to analyze the information of a motion so as to obtain a head information analysis result.

Next, the head information tracking unit transmits the head information analysis result to the audio effect conversion unit, and the audio effect conversion unit performs spatial audio conversion based on the head information analysis result. Specifically, the audio effect conversion unit calculates the predetermined time based on the head information analysis result, and predicts the head information after the predetermined time. Then, the audio effect conversion unit adjusts the spatial audio into adjusted spatial audio based on the head information after a predetermined period of time.

Furthermore, when the spatial audio playback device 110 transmits the adjusted spatial audio to the head-mounted device 120, the spatial audio output unit first obtains the adjusted spatial audio through the audio effect conversion unit, and then the spatial audio output unit transmits the adjusted spatial audio to the Bluetooth driver unit of the spatial audio playback device 110. Finally, the Bluetooth driver unit transmits the adjusted spatial audio to the head-mounted device 120 through the transceiver unit 111.

In some embodiments, the information of a motion of the head-mounted device on the motion sensing signal of the spatial audio playback device 110 includes instantaneous head position information or instantaneous head posture information. Specifically, the head-mounted device 120 includes at least one sensor, and the sensor includes a positioning module. The sensor can obtain the position information or posture information of the user's head in space in an instant during the movement of the user's head in space. The above-mentioned position information or posture information may be absolute position/posture information positioned in space, or relative position/posture information relative to the entire space or other components, but the embodiment is not limited thereto.

In other embodiments, the motion sensing signal of the spatial audio playback device 110 includes continuous head position information or continuous head posture information. Specifically, the head-mounted device 120 includes at least one sensor, and the sensor includes a positioning module. The sensor can obtain multiple position information or posture information of the user's head in space during a time segment during the movement of the user's head in space, and record continuous information of the multiple position information or posture information. The above-mentioned position information or posture information may be absolute position/posture information positioned in space, or relative position/posture information relative to the entire space or other components, but the embodiment is not limited thereto.

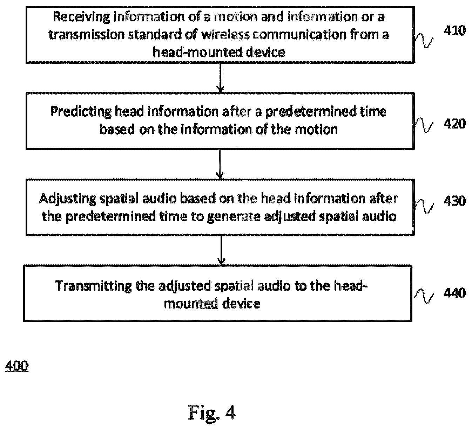

Fig. 4 illustrates a flow chart of a spatial audio playback method 400 according to an embodiment of the present disclosure. The spatial audio playback method in Fig. 4 can be implemented by the spatial audio playback device 110 in Fig. 1. In one embodiment, in step 410, the transceiver unit 111 of the spatial audio playback device 110 receives the information of a motion of the head-mounted device on the motion sensing signal of the head-mounted device 120 and the information or a transmission standard of the wireless communication from the head-mounted device 120. In step 420, the processing unit 112 of the spatial audio playback device 110 predicts the head information after a predetermined time based on the information of the motion. In step 430, the processing unit 112 of the spatial audio playback device 110 adjusts the spatial audio based on the head information after a predetermined time to generate adjusted spatial audio. In step 440, the processing unit 112 of the spatial audio playback device 110 transmits the adjusted spatial audio to the head-mounted device 120 through the transceiver unit 111.

In one embodiment, the adjusted spatial audio is transmitted to the head-mounted device by the transceiver unit, and the predetermined time changes according to the wireless communication information or the transmission standard of the wireless communication.

In one embodiment, in the spatial audio playback method 400, the predetermined time predicted by the processing unit 112 is plus or minus ten percent of the signal delay time period of the spatial audio playback device 110 and the head-mounted device 120. On the basis of the above, the predetermined time can be regarded as a time error range after the signal delay time period is adjusted.

In one embodiment, the information or the transmission standard of the wireless communication includes Bluetooth Codec or Bluetooth Profile. It is worth noting that, a variety of Bluetooth Codec or Bluetooth Profile can automatically switch different Bluetooth Codec or different Bluetooth Profile, or select/switch different Bluetooth Codec or Bluetooth Profile by the user. Moreover, different Bluetooth Codec or different Bluetooth Profile has their own encoding time while performing spatial information related processing.

In one embodiment, the signal delay time period of the head-mounted device 120 is the time difference between the time receiving the information of the motion of the head-mounted device and the time transmitting the adjusted spatial audio in the spatial audio playback method 400. The above time difference may includes multiple times when the spatial audio playback device 110 and the head-mounted device 120 process, transmit and receive the signals and spatial audio.

Based on the above, some embodiments of the present invention optimize the user's delay setting from the beginning to the end of movement by controlling spatial audio, so that the user experience of spatial audio is close to zero delay. Specifically, some embodiments of the present invention use information of a motion of the head-mounted device on the motion sensing signal transmitted by the user's head-mounted device to predict head information after a predetermined time, so as to effectively improve the user's listening experience by tracking changes of the user's head. Moreover, some embodiments of the present invention can support multiple different wireless communication information or transmission standard to adjust the delay time of spatial audio accordingly, wherein the predetermined time changes according to the wireless communication information or transmission standard. By the above content, some embodiments of the present invention can appropriately adjust the possible delay time period of spatial audio according to different playback devices and the user's head posture at different times and positions, so as to effectively improve the immediacy of spatial audio.

In the claims, the word "comprising" does not exclude other elements or steps, and the indefinite article "a" or "an" does not exclude a plurality. A single processor or other unit may fulfil the functions of several items recited in the claims. In addition, any reference signs in the claims should not be construed as limiting the scope thereof. Furthermore, Particular and preferred aspects of the disclosure are set out in the accompanying independent claims. Combinations of features from the dependent and/or independent claims may be combined as appropriate and not merely as set out in the claims.

All orientations and arrangements of the components shown herein are used by way of example only. Further, it will be appreciated by those of ordinary skill in the pertinent art that the functions of several elements may, in alternative embodiments, be carried out by fewer elements or a single element. Similarly, in some embodiments, any functional element may perform fewer, or different, operations than those described with respect to the illustrated embodiment. Also, functional elements that shown as distinct for purposes of illustration may be incorporated within other functional elements in a particular implementation.

While the subject technology has been described with respect to preferred embodiments, those skilled in the art will readily appreciate that various changes and/or modifications can be made to the subject technology without departing from the spirit or scope of the subject technology. For example, each claim may depend from any or all claims in a multiple dependent manner even though such has not been originally claimed.

## Claims

1. A spatial audio playback device (110), which is communicatively connected to a head-mounted device (120), comprising:
a transceiver unit (111), which communicates with the head-mounted device (120) through wireless communication, is configured to receive information of a motion of the head-mounted device (120) on a motion sensing signal and receive information or a transmission standard of the wireless communication from the head-mounted device (120); and
a processing unit (112), which is coupled to the transceiver unit (111), is configured to predict head information after a predetermined time based on the information of the motion, adjust spatial audio based on the predicted head information after the predetermined time to generate adjusted spatial audio and transmit the adjusted spatial audio to the head-mounted device (120) through the transceiver unit (111); and
wherein the predetermined time changes according to the information or the transmission standard of the wireless communication.

2. The spatial audio playback device (110) of claim 1, wherein the information or the transmission standard of the wireless communication includes Bluetooth Codec Type or Bluetooth Profile.

3. The spatial audio playback device (110) of claim 1, wherein the predetermined time is calculated based on a signal delay time period of the spatial audio playback device (110) and/or the head-mounted device (120).

4. The spatial audio playback device (110) of claim 3, wherein the signal delay time period is a time difference between the time when the head-mounted device (120) transmits the information of the motion of the head-mounted device (120) and the time when the head-mounted device (120) receives the adjusted spatial audio.

5. The spatial audio playback device (110) of claim 3, wherein the signal delay time period is a time difference between the time when the head-mounted device (120) sends the information of the motion of the head-mounted device (120) and the time when the head-mounted device (120) receives the adjusted spatial audio.

6. The spatial audio playback device (110) of claim 3, wherein the signal delay time period includes signal transmission and processing time of the transceiver unit (111) and the processing unit (112).

7. The spatial audio playback device (110) of claim 3, wherein the processing unit (112) includes a plurality of sub-processing units, and the signal delay time period includes signal transmission and processing time of one or more sub-processing units.

8. The spatial audio playback device (110) of claim 1, wherein the motion information of the head-mounted device (120) on the motion sensing signal includes instantaneous head position information or instantaneous head posture information.

9. The spatial audio playback device (110) of claim 1, wherein the motion sensing signal includes continuous head position information or continuous head posture information.

10. A method for spatial audio playback, comprising:
receiving (410) information of a motion and receiving information or a transmission standard of wireless communication from a head-mounted device (120);
predicting (420) head information after a predetermined time based on the information of the motion; and
adjusting (430) spatial audio based on the predicted head information after the predetermined time to generate adjusted spatial audio; and
transmitting (440) the adjusted spatial audio to the head-mounted device (120);
wherein the predetermined time changes according to the wireless communication information or transmission standard.

11. The method of claim 10, wherein the predetermined time is calculated based on a signal delay time period of the spatial audio playback device (110) and the head-mounted device (120).

12. The method of claim 11, wherein the information or the transmission standard of the wireless communication includes Bluetooth Codec Type or Bluetooth Profile.
